# EUROPEAN PATENT SPECIFICATION

(11) **EP 1 020 998 B1**
(45) Date of publication and mention of the grant of the patent: **18.03.2009**
(21) Application number: 99125876.5
(22) Date of filing: 24.12.1999
(51) Int. Cl.: H04N 7/52

(54) **Method and apparatus for encoding audio frame data**
Verfahren und Vorrichtung zu Kodierung von Audiorahmendaten
Méthode et dispositif de codage de trames données audio

(30) Priority: 12.01.1999 EP 99250006
(43) Date of publication of application: 19.07.2000
(73) Proprietor: Thomson Licensing, 92100 Boulogne-Billancourt (FR)
(72) Inventor: Voessing, Walter, 30455 Hannover (DE); Schreiber, Ulrich, 30827 Garbsen (DE)
(74) Representative: Hartnack, Wolfgang

(56) References cited:
- WO-A-97/15983
- DE-A- 4 222 150
- US-A- 4 845 752
- US-A- 5 706 396
- KIM S -Y ET AL: "A REAL-TIME IMPLEMENTATION OF THE MPEG-2 AUDIO ENCODER" IEEE TRANSACTIONS ON CONSUMER ELECTRONICS, vol. 43, no. 3, 1 August 1997 (1997-08-01), pages 593-597, XP000742536
- BOLAND S ET AL: "NEW RESULTS IN LOW BITRATE AUDIO CODING USING A COMBINED HARMONIC -WAVELET REPRESENTATION" 1997 IEEE INTERNATIONAL CONFERENCE ON ACOUSTICS, SPEECH, AND SIGNAL PROCESSING, PLENARY, EXPERT SUMMARIES, SPECIAL, AUDIO, UNDERWATER ACOUSTICS, VL MUNICH, APR. 21 - 24, 1997, vol. 1, 21 April 1997 (1997-04-21), pages 351-354, XP000789186 INSTITUTE OF ELECTRICAL AND ELECTRONICS ENGINEERS

## Description

The invention relates to a method and to an apparatus for encoding audio frame data.

### Background

For broadcasting purposes a 4-stereo-channel MPEG audio encoder board has been designed. A requirement for such encoders is that they are able to operate with different encoding parameters. MPEG allows e.g. various sample frequencies and overall data rates.
S.-Y. Kim et al., "A real-time implementation of the MPEG-2 audio encoder", IEEE Transactions on Consumer Electronics, vol.43, no.3, 1 August 1997, pp.593-597, describe the hardware of a single MPEG-2 audio encoder and the corresponding job scheduling for a single given-parameter audio signal.
DE 4222150 A1 shows audio signal encoding/decoding in which before encoding/decoding the audio signal the sampling frequency and/or the bitrates can be selected from a given set of frequencies/bitrates.

### Invention

A problem arises when during normal encoding operation one or more parameters change. This may happen when the current type of program changes, e.g. from pure speech or news to music.
Normally the audio frames are processed in an encoder in subsequent different stages, for example conversion to frequency coefficients in a first stage and bit allocation and quantisation in a further stage. In a path in parallel to the first stage the psychoacoustic masking is calculated.
A video encoder includes the following stages: block difference stage, DCT (discrete cosine transform), quantisation and in the feedback loop inverse quantisation, inverse DCT, motion compensated interpolation the output of which is input to the block difference stage, wherein the output of the quantisation is possibly VLC (variable length coding) encoded and buffered before final output and the buffer filling level is used to control the quantisation in such a way that encoding artefacts are masked as far as possible.

If the encoding parameters would generally change at a time instant where a certain audio frame has been processed in such first stage but not yet in such further stage, the data of this frame will become useless after having been processed in the further stage with the changed encoding parameters.

In order to avoid such problem a big table with the old encoding parameters and a big table with the new encoding parameters could be stored in the encoder for some time for each channel wherein the 'depth' of the tables would depend on the number of streams within the encoder and which would require repeated updating. All processing stages of the encoder would need to have access to both channel tables and would need to determine at which time to access which of the tables. In particular in a multichannel encoder in which different channels may change different encoding parameters at different times, the channels possibly being assigned to different microprocessors, this solution could easily produce errors. The tables would require more memory capacity than the solution described below.

It is one object of the invention to disclose a method for encoding audio frame data for which encoding parameters are required. This object is achieved by the method defined in claim 1.

It is a further object of the invention to disclose an apparatus which utilises the inventive method. This object is achieved by the apparatus defined in claim 3.

In the invention, intermediately stored general parameter tables are not used. Instead, the encoding parameters required for a specific processing path are added to the input streams for the audio channels and become linked with the associated audio data and are stored in the various buffers together with its audio data, i.e. the corresponding encoding parameters are kept linked with the audio data to be encoded throughout the encoding processing in the different data streams and data paths. Preferably the original encoding parameters assigned to the processing paths become converted to a different format in order to minimise the required word length and/or to facilitate easy evaluation in the related processing stages.
Thereby each data stream can be processed with the correct parameter set without waiting for finishing encoding of the old data stream and for reset and loading of new parameters before starting encoding of a new data stream with new parameters.

The invention can also be used in audio or video decoders whith a corresponding inverse order of processing stages.

Advantageous additional embodiments of the inventive method and apparatus are disclosed in the respective dependent claims.

### Drawings

Embodiments of the invention are described with reference to the accompanying drawings, which show in:
- Fig. 1: functional block diagram of a 4-channel audio encoder;
- Fig. 2: linked data field including audio data to be encoded and associated encoding parameters;
- Fig. 3: microprocessor with memory including linked data fields.

### Exemplary embodiments

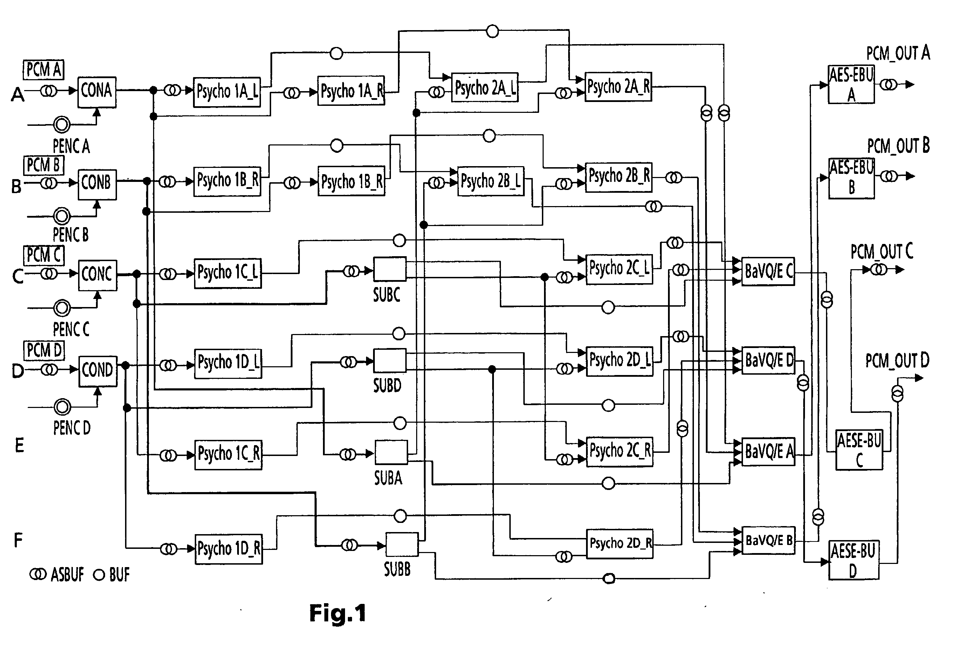

The audio encoder in Fig. 1 receives four stereo PCM input signals PCMA, PCMB, PCMC and PCMD. E.g. MPEG audio data are frame based, each frame containing 1152 mono or stereo samples. The encoder operating system of Fig. 1 may include six DSPs (Digital Signal Processor, not depicted) for the encoding of the four MPEG channels. These DSPs form a software encoder which includes the technical functions depicted in Fig. 1. A suitable type of DSP is for example ADSP 21060 or 21061 or 21062 of Analog Devices. As an alternative, the technical functions depicted in Fig. 1 can be realised in hardware.
Synchronisation of the software running on the six DSPs, or on corresponding hardware, is achieved using FIFO buffers wherein each buffer is assigned to one or some specific frames. This means that at a certain time instant a current frame as well as previous frames, the number of which depends from the quantity of available buffers, are present in the processing stages.
A global parameter switching would cause assignment of the new parameters to also such buffers which still contain data to be processed by the previous set of parameters. This would make the content of such buffers useless. In the invention, however, various encoding parameters like coding mode (mono, stereo, dual, joint stereo), sample rate and data rate can be changed 'on the fly' without reset and without producing invalid encoder output data.
Between some of the stages asynchronous buffers ASBUF are inserted which allow asynchronous write and read operations. Between other stages synchronous buffers BUF are sufficient. The PCM input signals PCMA, PCMB, PCMC and PCMD each pass via an asynchronous buffer to a respective converter CONA, CONB, CONC and COND. In such converter an integer-to-floating representation conversion of the audio samples to be encoded may take place. It is also possible that the encoder processes integer representation audio samples. In such converter also one or more kinds of energy levels in a frame may be calculated, e.g. energy of all samples of the frame or average energy of the samples of a frame. These energy values may be used in the subsequent psychoacoustic processing.
In addition, in such converter the possibly adapted encoding parameters become linked with the frame audio data. In respective parameter encoders PENCA, PENCB, PENCC and PENCD the original encoding parameters may be converted as described above and then fed to CONA, CONB, CONC and COND, respectively. In an MPEG decoder the decoding parameters in the transmitted datastream may be adapted correspondingly according to the hardware or software requirements in the decoder before being (re-)linked to each data frame.

Via asynchronous buffers the output data of CONA, CONB, CONC and COND are fed in parallel to subband filters SUBA, SUBB, SUBC and SUBD and to first left and right channel psychoacoustic calculators Psycho1A_L, Psycho1A_R, Psycho1B_L, Psycho1B_R, Psycho1C_L, Psycho1C_R, Psycho1D_L and Psycho1D_R, respectively. The subband filters divide the total audio spectrum into frequency bands, possibly using FFT, and may calculate the maximum or scale factor of the coefficients in a frequency band or subband. Within the frequency bands a normalisation may be carried out. The subband filters take into account the relevant encoding parameters read from the corresponding upstream asynchronous buffer. The first psychoacoustic calculators perform an FFT having a length of e.g. 1024 samples and determine the current masking information. Each first psychoacoustic calculator can be followed by a second psychoacoustic calculator Psycho2A_L, Psycho2A_R, Psycho2B_L, Psycho2B_R, Psycho2C_L, Psycho2C_R, Psycho2D_L and Psycho2D_R, respectively, which evaluates the maximum or scale factor values previously calculated in the subband filters. The first and second psychoacoustic calculators take into account the relevant encoding parameters read from the corresponding upstream asynchronous buffers. The output signals of Psycho2A_L, Psycho2A_R, Psycho2B_L, Psycho2B_R, Psycho2C_L, Psycho2C_R, Psycho2D_L and Psycho2D_R are used in bit allocators and quantisers Bal/Q/E_A, Bal/Q/E_B, Bal/Q/E_C and Bal/Q/E_D, respectively, for determining the number of bits allocated and the quantisation the audio data coefficients coming from the associated subband filter via a buffer. It is also possible to calculate in the second psychoacoustic calculators in addition what is being calculated in the first psychoacoustic calculators and thereby to omit the first psychoacoustic calculators. Finally, the outputs of Bal/Q/E_A, Bal/Q/E_B, Bal/Q/E_C and Bal/Q/E_D pass through an asynchronous buffers and output interfaces AES-EBU_A, AES-EBU_B, AES-EBU_C, AES-EBU_D, respectively, which deliver the encoder stereo output signals PCM_Out_A, PCM_Out_B, PCM_Out_C, PCM_Out_D, respectively.

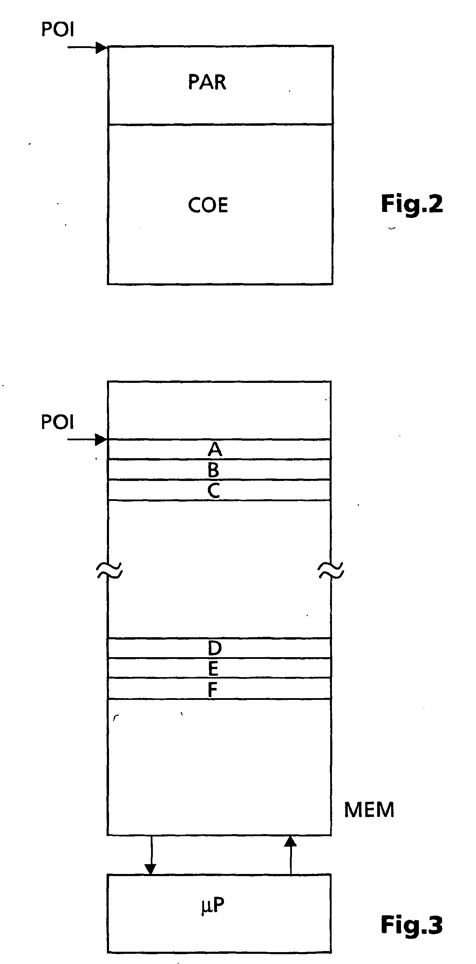

Fig. 2 shows a data field including audio samples or audio coefficients COE for a frame. To these samples or coefficients encoding or decoding parameters PAR are linked or assigned. PAR includes for instance mode information (mono, stereo, dual, joint stereo), sample rate and data rate information, length of the data field, type of MPEG layer. An address pointer POI indicates the begin of the parameters data PAR.

In Fig. 3 a microprocessor or DSP µP is shown together with its memory MEM. In the memory some data fields A to F are depicted which correspond to data fields as shown in Fig. 2. E.g. data fields A, B and C may correspond to data fields of three succeeding audio frames in one of the data paths of Fig. 1. Data field A may include other encoding parameters PAR than data fields B and C. The address of the begin of data field B can be calculated by adding the length of data field A to POI.

The software running on µP can use the following example commands in C-language for constructing the data fields according to Fig. 2:

```
 typedef struct {
         .
         .
         .
   int bitrate_index
   int sampling_frequency
       .
       .
       .
 } layer;
 "struct" may also contain time stamp information.
 #define FRAMESIZE 1152 /*1152 is a decimal number*/
 typedef struct {
         .
         .
         .
   layer info
        .
        .
        .
   float PCMBuf[FRAMESIZE]
 } FloatBuffer L Type
```

The invention can be used e.g. for MPEG 1, 2 and 4 Audio encoding and decoding for MPEG layers 1, 2 or 3, Digital Video Broadcast DVB, for AC-3, MD and AAC processing, for DVD processing and Internet applications concerning audio or video data encoding and decoding.

## Claims

1. Method for encoding audio frame data (PCMA, PCMB, PCMC, PCMD) for which encoding parameters (PAR) are required, said method including the following steps:
- at the input of the encoding processing, linking (CONA, CONB, CONC, COND) the required encoding parameters with frames of said audio data;
- converting (SUBA, SUBB, SUBC, SUBD) time domain samples into frequency domain coefficients, wherein buffer means are assigned to the input of that conversion;
- calculating (Psycho1A_L, Psycho1A_R, Psycho1B_L, Psycho1B_R, Psycho1C_L, Psycho1C_R, Psycho1D_L, Psycho1D_R, Psy-cho2A_L, Psycho2A_R, Psycho2B_L, Psycho2B_R, Psycho2C_L, Psycho2C_R, Psycho2D_L, Psycho2D_R) masking properties from said time domain samples, wherein buffer means are assigned to the input of that masking properties calculation;
- performing bit allocation and quantisation (Ba1/Q/E_A, Ba1/Q/E_B, Ba1/Q/E_C, Ba1/Q/E_D) of the coefficients under the control of the output of said masking calculating, wherein buffer means are assigned to the input of that bit allocation and quantisation, and wherein, during encoding, all said buffer means contain data fields including audio frame data (COE) and the associated encoding parameters (PAR), and wherein in said conversion, masking properties calculation, and bit allocation and quantisation steps the corresponding encoding parameters linked with respective current frame data to be processed are evaluated, so as to avoid, when changing the encoding parameters, resetting of said encoding or encoding invalid output data (PCM_OutA, PCM_OutB, PCM_OutC, PCM_OutD).

2. Method according to claim 1, wherein the encoding parameters become converted (PENCA, PENCB, PENCC, PENCD) to a different format before being linked to the frames of said audio data to be encoded.

3. Apparatus for encoding audio frame data (FCMA, PCMB, PCMC, PCMD) for which encoding parameters (PAR) are required, said apparatus including:
- means for linking (CONA, CONB, CONC, COND) the required encoding parameters with frames of said audio data, said linking means being arranged at the input of said apparatus;
- means (SUBA, SUBB, SUBC, SUBD) for converting time domain samples into frequency domain coefficients, to the input of which conversion means buffer means are assigned;
- means (Psycho1A_L, Psycho1A_R, Psycho1B_L, Psychol1B_R, Psycho1C_L, Psycho1C_R, Psycho1D_L, Psycho1D_R, Psycho2A_L, Psycho2A_R, Psycho2B_L, Psycho2B_R, Psycho2C_L, Psycho2C_R, Psycho2D_L, Psycho2D_R) for calculating masking properties from said time domain samples, to the in-put of which masking properties calculating means buffer means are assigned;
- means (Ba1/Q/E_A, Ba1/Q/E_B, Ba1/Q/E_C, Ba1/Q/E_D) for performing bit allocation and quantisation of the coefficients under the control of the output of said masking properties calculating means, to the input of which bit allocation and quantisation means buffer means are assigned,
wherein, during encoding, all said buffer means contain data fields including audio frame data (COE) and the associated encoding parameters (PAR), and wherein in said conversion means, in said masking properties calculating means and in said bit allocation and quantisation means the corresponding encoding parameters linked with respective current frame data to be processed are evaluated, so as to avoid resetting of said apparatus or encoding invalid output data (PCM_OutA, PCM_OutB, PCM_OutC, PCM_OutD) when changing the encoding parameters.

4. Apparatus according to claim 3, wherein the encoding parameters become converted (PENCA, PENCB, PENCC, PENCD) to a different format before being linked to the frames of said audio data to be encoded.

## Patentansprüche

1. Verfahren zum Kodieren von Audio-Rahmendaten (PCMA, PCMB, PCMC, PCMD), für die Kodierparameter (PAR) benötigt werden, umfassend die folgenden Schritte:
- Verknüpfen (CONA, CONB, CONC, COND) der benötigten Kodierparameter mit Rahmen der Audiodaten am Eingang der Kodierverarbeitung;
- Umwandeln (SUBA, SUBB, SUBC, SUBD) von Zeitbereichs-Abtastungen in Frequenzbereichs-Koeffizienten, wobei dem Eingang der Umwandlung Zwischenspeichermittel zugeordnet sind;
- Berechnen (Psycho1A_L, Psycho1A_R, Psycho1B_L, psycho1B_R, Psycho1C_L, Psycho1C_R, Psyhco1D_L, Psycho1D_R, Psycho2A_L, Psycho2A_R, Psycho2B_L, Psycho2B_R, Psycho2C_L, Psycho2C_R, Psycho2D_L, Psycho2D_R) von Verdeckungseigenschaften aus den Zeitbereichs-Abtastungen, wobei dem Eingang der Verdeckungseigenschaften-Berechnung Zwischenspeichermittel zugeordnet sind;
- Ausführen einer Bit-Zuordnung und Quantisierung (Ba1/Q/E_A, Ba1/Q/E_B, Ba1/Q/E_C, Ba1/Q/E_D) der Koeffizienten unter Steuerung des Ausgangs der Verdeckungsberechnung, wobei dem Eingang der Bit-Zuordnung und Quantisierung Zwischenspeichermittel zugeordnet sind, und wobei während der Kodierung alle Zwischenspeichermittel Datenfelder enthalten, die Audio-Rahmendaten (COE) und die zugeordneten Kodier-Parameter (PAR) einschließen, und wobei in den Schritten der Umwandlung, der Berechnung der Verdeckungseigenschaft, der Bit-Zuordnung und der Quantisierung die entsprechenden Kodier-Parameter, die mit den entsprechenden aktuellen zu verarbeitenden Rahmendaten verknüpft sind, ausgewertet werden, um so bei Änderung der Kodier-Parameter ein Zurücksetzen der Kodierung oder die Kodierung ungültiger Ausgangsdaten (PCM_OutA, PCM_OutB, PCM_OutC, PCM-OutD) zu vermeiden.

2. Verfahren nach Anspruch 1, bei dem die Kodier-Parameter in ein anderes Format umgewandelt werden (PNCA, PNCB, PNCC, PNCD), bevor sie mit den Rahmen der zu kodierenden Audiodaten verknüpft werden.

3. Vorrichtung zum Kodieren von Audio-Rahmendaten (PCMA, PCMB, PCMC, PCMD), für die Kodier-Parameter (PAR) benötigt werden, umfassend:
- Mittel zum Verknüpfen (CONA, CONB, CONC, COND)der benötigten Kodier-Parameter mit Rahmen der Audiodaten, wobei die Verknüpfungsmittel am Eingang der Vorrichtung angeordnet sind;
- Mittel (SUBA, SUBB, SUBC, SUBD) zum Umwandeln von Zeitbereichs-Abtastungen in Frequenzbereichs-Koeffizienten, wobei dem Eingang der Umwandlungsmittel Zwischenspeichermittel zugeordnet sind;
- Mittel (psycho1A_L, Psycho1A_R, psycho1B_L, Psycho1B_R, Psycho1C_L, Psycho1C_R, Psycho1D_L, Psycho10_R, Psycho2A_L, Psycho2A_R, Psycho2B_L, Psycho2B_R, Psycho2C_L, Psycho2C_R, Pscho2D_L, Psycho2D_R) zum Berechnen von Verdeckungseigenschaften aus den Zeitbereichs-Abtastungen, wobei dem Eingang der Berechnungsmittel der Verdeckungseigenschaften Zwischenspeichermittel zugeordnet sind;
- Mittel (Ba1/Q/E_A, Ba1/Q/E_B, Pa1/Q/E_C, Ba1/Q/E_D) zur Ausführung einer Bit-Zuordnung und Quantisierung der Koeffizienten unter der Steuerung des Ausgangs der Mittel zur Berechnung der Verdeckungseigenschaften, wobei dem Eingang der Bit-Zuordnungs- und Quantisierungsmittel Zwischenspeichermittel zugeordnet sind, und wobei während der Kodierung alle Zwischenspeichermittel Datenfelder enthalten, die Audio-Rahmendaten (COE) und die zugeordneten Kodier-Parameter einschließen, und wobei in den Umwandlungsmitteln, den Berechnungsmitteln der Verdeckungseigenschaften und in den Bit-Zuordnungs- und Quantisierungsmitteln die entsprechenden Kodier-Parameter, die mit den entsprechenden aktuellen, zu verarbeitenden Rahmendaten verknüpft sind, ausgewertet werden, um so bei Änderung der Kodier-Parameter ein Zurücksetzen der Vorrichtung oder eine Dekodierung ungültiger Ausgangsdaten (PCM_OutA, PCM_OutB, PCM_OutC, PCM_OutD) zu vermeiden.

4. Vorrichtung nach Anspruch 3, bei der die Kodier-Parameter in ein anderes Format umgewandelt werden PENCA, PENCB, PENCC, PENCD), bevor sie mit den Rahmen der zu kodierenden Audiodaten verknüpft werden.

## Revendications

1. Procédé de codage de données audio sous forme de trames (PCMA, PCMB, PCMC, PCMD) pour lequel des paramètres de codage (PAR) sont nécessaires, ledit procédé comprenant le étapes suivantes :
- avant le traitement de codage, établissement de liens (CONA, CONB, CONC, COND) entre les paramètres de codage nécessaires et les trames desdites données audio ;
- conversion (SUBA, SUB, SUC, SUBD) d'échantillons du domaine temporel en coefficients du domaine fréquentiel, dans lequel sont affectés des moyens de mémoire tampon avant cette étape de conversion ;
- calcul (psycho1A_L, psycho1A_R, Psycho1B_L, psych1B_R, Psycho1C_L, Psycho1C_R, Psycho1D_L, Psycho1D_R, Psycho2A_L, Psycho2A_R, Psycho2B_L, Psycho2B_R, Psycho2C_L, Psycho2C_R, Psycho2D_L, Psycho2D_R) des propriétés de masquage à partir desdits échantillons du domaine temporel, dans lequel sont affectés des moyens de mémoire tampon avant cette étape de calcul des propriétés de masquage ;
- réalisation d'une affectation de bits et d'une quantification (Bal/Q/E_A, Bal/Q /E_B, Bal/Q/E_C, Bal/Q/E_D) des coefficients en fonction du résultat dudit calcul des propriétés de masquage, dans lequel sont affectés des moyens de mémoire tampon avant cette affectation de bits et cette quantification, et dans lequel, pendant le codage, tous lesdits moyens de mémoire tampon contiennent des champs de données comprenant des données audio sous forme de trames (COE) et les paramètres de codage associés (PAR), et dans lequel dans ladite conversion, les étapes de calcul des propriétés de masquage, d'affectation de bits et de quantification, les paramètres de codage correspondants liés aux données sous forme de trame à traiter sont évalués, afin d'éviter, lors d'un changement de paramètres de codage, la remise à zéro desdites données de codage de sortie non valables ( PCM_OutA, PCM_OutB, PCM_OutC, PCM_OutD).

2. Procédé selon la revendication 1, dans lequel les paramètres de codage sont convertis (PENCA, PENCB, PENCC, PENCD) en un format différent avant que des liens soient établis entre eux et les trames desdites données audio à coder.

3. Appareil de codage de données audio sous forme de trames (PCMA, PCMB, PCMC, PCMD) pour lequel des paramètres de codage (PAR) sont nécessaires, ledit appareil comprenant les éléments suivants :
- des moyens d'établissement de liens (CONA, CONB, CONC, COND) entre des paramètres de codage nécessaires et les trames desdites données audio, lesdits moyens d'établissement de liens étant placés à l'entrée dudit appareil ;
- des moyens (SUBA, SUBB, SUBC, SUBD) de conversion d'échantillons du domaine temporel en coefficients du domaine fréquentiel, à l'entrée desquels moyens de conversion sont affectés des moyens de mémoire tampon ;
- des moyens (psycho1A_L, Psycho1A_R, psycho1B_L, psych1B_R, Psycho1C_L, Psycho1C_R, Psycho1D_L, Psycho1D_R, Psycho2A_L, Psycho2A_R, Psycho2B_L, Psycho2B_R, Psycho2C_L, Psycho2C_R, Psycho2D_L, Psycho2D_R) de calcul des propriétés de masquage à partir desdits échantillons du domaine temporel, à l'entrée desquels moyens de calcul des propriétés de masquage, sont affectés des moyens de mémoire tampon ;
- des moyens (Ba1/Q/E_A, Bal/Q /E_B, Ba1/Q/E_C, Ba1/Q/E_D) de réalisation d'une affectation de bits et d'une quantification des coefficients en fonction du résultat desdits moyens de calcul des propriétés de masquage, à l'entrée desquels moyens d'affectation de bits et de quantification sont affectés des moyens de mémoire tampon, dans lequel, pendant le codage, tous lesdits moyens de mémoire tampon contiennent des champs de données comprenant des données audio sous forme de trames (COE) et les paramètres de codage (COE) associés et dans lequel dans lesdits moyens de conversion, dans lesdits moyens de calcul des propriétés de masquage et dans lesdits moyens d'affectation de bits et de quantification, les paramètres de codage correspondants liés aux données sous forme de trames respectives à traiter sont évalués, afin d'éviter la remise à zéro dudit appareil ou desdites données de codage de sortie non valables (PCM_OutA, PCM_OutB, PCM_OutC, PCM_OutD). lors d'un changement de paramètres de codage.

4. Appareil selon la revendication 3, dans lequel les paramètres de codage sont convertis (PENCA, PENCB, PENCC, PENCD) en un format différent avant d'être liés aux trames desdites données audio à coder.
